# EUROPÄISCHE PATENTANMELDUNG

(11) **EP 4 775 286 A1**
(43) Veröffentlichungstag der Anmeldung: **15.07.2026**
(21) Anmeldenummer: 25216934.7
(22) Anmeldetag: 19.11.2025
(51) Int. Cl.: B01D 5/00, B01D 53/26, F28B 3/04, F28B 3/06, F28B 9/10

(54) **VERFAHREN UND VORRICHTUNG ZUR ABSCHEIDUNG VON ABDAMPF**

(30) Priorität: 13.01.2025 AT 500132025
(71) Anmelder: Andritz AG, 8045 Graz (AT)
(72) Erfinder: KRAMER, Michael, 8020 Graz (AT)
(74) Vertreter: Tschinder, Thomas

(57) **Zusammenfassung**

Den Gegenstand dieser Erfindung bildet ein Verfahren zur Abscheidung von Abdampf (4), insbesondere zur Abscheidung von Abdampf (4) aus Anlagen zur Zellstofferzeugung, wobei der Abdampf (4) einem Nasswäscher (1) zugeführt wird und kondensiert wird. Erfindungsgemäß wird der Abdampf (4) einem Trägergasstrom (5) zugeführt und dann gemeinsam mit dem Trägergasstrom (5) in den Nasswäscher (1) geleitet, in dem der Abdampf (4) mit Hilfe von zugeführtem Wasser (14) kondensiert wird. Der Nasswäscher (1) weist zumindest eine Gasverteileinrichtung (6) auf, durch die der Trägergasstrom (5) hindurchgeführt und in der der Abdampf (4) kondensiert wird, wobei die Gasverteileinrichtung (6) aus zumindest einem Stab- oder Rohrrost (7) oder aus einem Lochblech aufgebaut wird. Den Gegenstand dieser Erfindung bildet auch eine Vorrichtung zur Durchführung des Verfahrens.

## Beschreibung

Den Gegenstand dieser Erfindung bildet ein Verfahren zur Abscheidung von Abdampf, insbesondere zur Abscheidung von Abdampf aus Anlagen zur Zellstofferzeugung, mit Hilfe eines Nasswäschers.

Den Gegenstand dieser Erfindung bildet auch eine Vorrichtung zur Durchführung des Verfahrens.

In verschiedenen Prozessstufen in der Industrie fallen mitunter Abdampfströme an, die der Einfachheit halber häufig in die Umgebung abgeblasen werden. Zum Beispiel sind in Anlagen der Zellstofferzeugung, und dort insbesondere im Bereich der Zellstoffbleiche solche Abdampfströme vorzufinden. Neben Wasserdampf sind zum Teil auch organische flüchtige Verbindungen Bestandteil des Abdampfes.

Der Austrag von Abdampf in die Atmosphäre bringt mehrere Probleme mit sich. Einerseits kommt es durch die Abdampffahne zu einer "optischen Umweltverschmutzung". Andererseits führen die im Abdampf enthaltenen organischen flüchtigen Substanzen zu einer Geruchsbelästigung. Insbesondere aber führt das Ableiten des Abdampfs in die Umgebung zu einem erheblichen Energieverlust. Im Lichte steigender Energiepreise und auch durch die Energiewende und den Klimawandel treten nun auch Technologien in den Vordergrund, welche zum Ziel haben, eine Einsparung an Primärenergie zu ermöglichen.

Die DE 83 06 847 U1 offenbart beispielsweise eine Vorrichtung zur Rückgewinnung von Wärme aus dem Abdampf in Anlagen zur Herstellung von Papierstoff. Dabei wird der Abdampf einer Waschkammer und einem stromab angeordneten Kondensator zugeführt. In der Waschkammer wird der Abdampf mit Hilfe einer mit flüssigem Kondensat gespeisten Zerstäubereinrichtung von Verunreinigungen befreit. Im nachfolgenden, baulich getrennten Kondensator wird dann der Abdampf durch eine von oben nach unten gerichtete Berieselung kondensiert.

Durch diese Vorrichtung gemäß der DE 83 06 847 U1 kann einerseits ein Teil der im Abdampf enthaltenen Energie rückgewonnen werden und andererseits werden auch im Abdampf enthaltene Verunreinigungen entfernt. Diese Vorrichtung weist jedoch einen recht komplexen Aufbau auf und ist auch anfällig für eventuell auftretende Druckschläge.

Ziel der Erfindung ist es somit, ein möglichst einfaches und sicheres Verfahren bereitzustellen, bei dem eine austretende Dampffahne verhindert werden kann, bei dem zumindest ein Teil der löslichen, flüchtigen Dampfbestandteile abgeschieden werden kann und bei dem auch die Möglichkeit besteht, die Abwärme zu nutzen.

Gelöst wird diese Aufgabe durch ein Verfahren gemäß Patentanspruch 1.

Bei diesem Verfahren wird der Abdampf einem Nasswäscher zugeführt und kondensiert. Erfindungsgemäß wird dabei der Abdampf einem Trägergasstrom zugeführt und dieser Trägergasstrom wird dann mit dem Abdampf einem Nasswäscher zugeführt. Im Nasswäscher wird der Abdampf mit Hilfe von zugeführtem Wasser kondensiert. Der Nasswäscher weist zumindest eine Gasverteileinrichtung auf, durch die der Trägergasstrom hindurchgeführt und der Abdampf kondensiert wird, wobei die Gasverteileinrichtung aus zumindest einem Stab- oder Rohrrost oder aus zumindest einem Lochblech aufgebaut ist. Vorzugsweise ist die Gasverteileinrichtung aus zumindest zwei übereinander angeordneten, vertikal beabstandeten Stab- oder Rohrrosten aufgebaut.

Durch die Gasverteileinrichtung wird das Trägergas und der darin enthaltene Abdampf einerseits vergleichmäßigt und andererseits wird dadurch ein hochturbulentes Suspensionsregime (Sprudelschicht) mit dem zugeführten Wasser erzeugt, sodass der Abdampf besonders gut kondensiert werden kann. Die Gasverteilungsebene besteht beispielsweise aus einer Vielzahl von miteinander verbundenen Rohren ("Rollenrost").

Die Erfinder haben erkannt, dass die Dampfabscheidung gegenüber herkömmlich verwendeter Verrieselungseinrichtungen durch die Verwendung eines Trägergasstromes und der speziellen Gasverteileinrichtung erheblich verbessert werden kann. Das zur Kondensation verwendte Wasser wird oberhalb der Gasverteilungseinrichtung zugeführt, beispielsweise über ein Rohr mit seitlichen Öffnungen, das sich parallel zur Gasverteileinrichtung erstreckt. Der Trägergasstrom dient zur Vermeidung von eventuell auftretenden Druckschlägen, die durch die Dampfkondensation verursacht werden können. Der Trägergasstrom ermöglicht somit einen geordneten Wäscherbetrieb.

Es ist günstig, wenn durch die Gasverteileinrichtung der freie Gasquerschnitt auf 15% bis 50% des gesamten Querschnittes des Nasswäschers reduziert wird.

Als Trägergas wird vorzugsweise Luft verwendet.

Es ist vorteilhaft, wenn der Trägergasstrom durch ein Gebläse im Kreis geführt wird und dabei der Abdampf dem Trägergasstrom vor dem Gebläse zugeführt wird. Es ist auch denkbar, dass der Abdampf nach dem Gebläse zugeführt wird.

Es ist aber auch denkbar, dass der Trägergasstrom nicht im Kreis geführt wird, sondern nach dem Nasswäscher mit Hilfe eines Wärmetauschers erwärmt wird und danach ins Freie abgegeben wird. Durch diese Wärmezufuhr kann im Trägergasstrom enthaltener Restdampf so erwärmt werden, dass bei der Abgabe an die Umgebung keine Dampffahne sichtbar ist. Dem Wärmetauscher kann zur Erwärmung des Trägergasstromes ein Teilstrom des heißen Abdampfes zugeführt werden. Das im Wärmetauscher gebildete Kondensat aus dem Abdampfteilstrom kann dem Sumpf des Wäschers zugeführt werden.

Der Abgasstrom kann aber auch ohne Wiedererwärmung in die Umgebung abgeführt werden, wenn die Abgasstromtemperatur genügend hoch ist.

Das zur Kondensation verwendete Kühlwasser kann beispielsweise aus dem Sumpf des Nasswäschers entnommen werden und mit Hilfe einer Pumpe zumindest zum Teil erneut dem Nasswäscher zur Kondensation des Abdampfes zugeführt werden. Dabei wird ein Teil des Wassers aus dem Sumpf abgeführt und durch kälteres Frischwasser ersetzt. Es ist auch denkbar, dass das zur Kondensation verwendete Wasser nicht im Kreis geführt wird, sondern dass dem Nasswäscher oberhalb der Gasverteileinrichtung kälteres Frischwasser zugeführt wird und dem Sumpf Heißwasser entnommen wird. Auf eine Pumpe zur Umwälzung des Wassers kann dann verzichtet werden.

Die im abgeführten Heißwasser enthaltene Wärme wird vorzugsweise rückgewonnen, beispielsweise mit Hilfe eines Wärmetauschers oder einer Wärmepumpe.

Wird der Abdampfkondensator im Kreislaufbetrieb betrieben, dann müssen etwaige im Abdampf vorhandene gasförmige, (z.B. organische) Verbindungen zur Vermeidung eines Überdrucks im Nasswäscher durch ein Überdruckventil oder durch eine Öffnung abgelassen werden. Das Überdruckventil kann sich dabei auch in der Ringleitung für das Trägergas befinden. Die abgelassenen gasförmigen Verbindungen werden vorzugsweise einer entsprechenden Nachbehandlung, zum Beispiel einer Verbrennung unterzogen.

Die Erfindung betrifft auch eine Vorrichtung zur Kondensation von Abdampf, insbesondere zur Kondensation von Abdampf aus Anlagen zur Zellstofferzeugung mit Hilfe eines Nasswäschers. Die Vorrichtung weist eine Zuleitung für ein Trägergas auf, die in den Nasswäscher mündet. Die Abdampfleitung für den Abdampf mündet in diese Zuleitung. Der Nasswäscher weist zumindest eine Gasverteileinrichtung auf, die aus zumindest einem Stab- oder Rohrrost oder aus Lochblechen aufgebaut ist. Vorzugsweise ist die Gasverteileinrichtung aus zumindest zwei übereinander angeordneten, vertikal beabstandeten Stab- oder Rohrrosten aufgebaut.

Vorzugsweise ist die Zuleitung Bestandteil einer Ringleitung, in die auch der Nasswäscher integriert ist. Der Trägergasstrom kann dadurch im Kreis geführt werden, vorzugsweise mit Hilfe eines Gebläses. Die Abdampfleitung mündet in die Ringleitung, vorzugsweise in Strömungsrichtung des Trägergases betrachtet, vor dem Gebläse.

Es ist günstig, wenn oberhalb der Gasverteileinrichtung ein Tropfenabscheider angeordnet ist, dadurch lässt sich mehr Flüssigkeit aus dem Trägergasstrom abscheiden.

Der Nasswäscher oder die Ringleitung kann auch ein Überdruckventil aufweisen, durch das sich im Trägergas anreichernde gasförmige Bestandteile abgelassen werden können, sodass ein Überdruck im Trägergasstrom vermieden werden kann.

Der Nasswäscher kann auch mehrere, vorzugsweise zwei oder drei Gasverteileinrichtungen aufweisen, die in vertikaler Richtung betrachtet voneinander beabstandet sind.

Im Folgenden werden zwei Ausführungsbeispiele der Erfindung anhand von Zeichnungen beschrieben. Es zeigen:
Fig. 1 eine schematische Ansicht eines Ausführungsbeispiels der erfindungsgemäßen Vorrichtung;
Fig. 2 eine Schnittansicht durch den Nasswäscher;
Fig. 3 ein weiteres Ausführungsbeispiel der Erfindung:

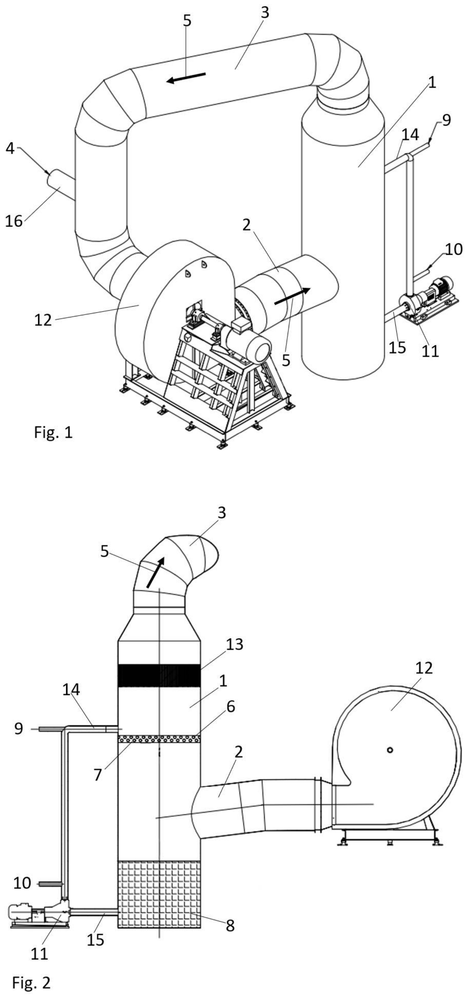

In Figur 1 ist ein Ausführungsbeispiel einer erfindungsgemäßen Vorrichtung zum Abscheiden von Abdampf 4 dargestellt. Dabei wird der Abdampf 4 über eine Abdampfleitung 16 dem Trägergasstrom 5 zugeführt und mit Hilfe eines Gebläses 12 in einen Nasswäscher 1 geleitet. Dafür mündet die Abdampfleitung 16 in die Zuleitung 2 für den Trägergasstrom 5, welche in den Nasswäscher 1 mündet.

Der Nasswäscher 1 ist (in Figur 2 dargestellt) mit einer oder mehreren Ebenen einer Gasverteileinrichtung 6 ausgestattet. Oberhalb der Gasverteileinrichtung 6 wird dem Nasswäscher 1 Wasser 14 zugeführt. Zur Dampfniederschlagung wird hier das Kreislaufwasser 15 aus Sumpf 8 des Nasswäschers 1 mit Hilfe einer Pumpe 11 im Kreis gefahren. Gleichzeitig wird ein Frischwasserstrom 9 dem System zugeführt, um die Waschwassertemperatur abzusenken. Je höher die zugeführte Frischwassermenge, desto geringer die Temperatur des abzuführenden Kreislaufwassers 15. Das Kreislaufwasser 15 setzt sich dabei aus dem zugeführten Frischwasser 9 und dem anfallenden Kondensat zusammen. Zusätzlich sind im Kreislaufwasser 15 verschiedene kondensierbare oder wasserlösliche Stoffe enthalten, abhängig von der Dampfzusammensetzung und der eingestellten Kreislauftemperatur. Ein Teil des Kreislaufwassers 15 wird als Heißwasser 10 abgezogen und kann für die Energierückgewinnung verwendet werden.

In der Gasphase wird der Trägergasstrom 5 über eine Ringleitung 3 im Kreis gefahren, dabei wird er saugseitig vor dem Gebläse 12 mit dem Abdampf 4 vermischt, erfährt durch das Gebläse 12 eine Druckerhöhung und passiert anschließend über die Zuleitung 2 den Nasswäscher 1. Durch den intensiven Kontakt Wasser / Dampf in der Gasverteileinrichtung 6 findet eine Abkühlung statt, sowie in der Folge ein Phasenübergang von gasförmig auf flüssig. Im Regelfall reicht eine Ebene der Gasverteileinrichtung 6 aus, es sind aber auch bei hoher Anforderung an die Niederschlagung mehrere übereinander angeordnete Ebenen denkbar.

Nach dem Nasswäscher 1 wird der Trägergasstrom 5 durch die Ringleitung 3 wieder dem Gebläse 12 zugeführt. Es muss beachtet werden, dass die zugeführte Frischwassermenge 9 die Kondensationswärme des Abdampfes 4 aufnehmen kann. Temperaturen über 70°C gehen mit einer starken Erhöhung des Dampfdruckes einher, und sind bei der Dimensionierung des Nasswäschers 1 zu berücksichtigen.

Aus dem Sumpf 8 des Nasswäschers 1 wird das Wasser rezirkuliert und mit Frischwasser 9 vermischt. Via Überlauf werden das zugegebene Frischwasser 9 und das gebildete Kondensat, die das Heißwasser 10 ergeben, aus dem System entfernt und einer weiteren Verwertung zugeführt.

Bei entsprechender Anpassung der Frischwasserdosierung kann in einem weiten Bereich die Wasserabzugstemperatur eingestellt werden. Dabei ist zu beachten, dass bei Temperaturen über 70°C und darüber der Wäscherquerschnitt sehr rasch größer wird, weil durch das rasche Ansteigen des Dampfdrucks der Betriebsvolumenstrom sehr schnell anwächst.

Etwaige gasförmige Verbindungen im Abdampf 4, die sich nicht niederschlagen lassen, bzw. die nicht wasserlöslich sind reichern sich bei Kreislaufbetrieb im Trägergasstrom 5 an und müssen über ein Überdruckventil (nicht dargestellt) abgelassen werden. Eventuell ausgetragene Luft wird durch einen Belüftungsventilator (nicht dargestellt) unmittelbar vor dem Gebläse wieder eingetragen. Für eine komplette Reinigung des Abdampfes 4 ist hier eine weiterführende Behandlung, ausgerichtet auf die noch enthaltenen Schadstoffe, vorzusehen (z.B. RTO Anlage zur Oxidation der Organik oder ähnliches).

Figur 2 zeigt eine Schnittdarstellung durch den Nasswäscher 1. Die Gasverteileinrichtung 6 besteht aus einer Vielzahl von einzelnen Stäben oder Rohren, die Stab- oder Rohrroste 7 bilden. Die einzelnen Stäbe oder Rohre können über Verbindungsrohre oder Verbindungselemente miteinander verbunden ein. Durch die Gasverteileinrichtung 6 wird der Trägergasstrom 5 mit dem darin enthaltenen Abdampf 4 innerhalb des Nasswäschers 1 gleichmäßiger verteilt und außerdem werden dadurch im Trägergasstrom 5 Turbulenzen induziert, die zu einer intensiveren Vermischung des Trägergases 5 mit dem dem Nasswäscher 1 zugeführten Wasser 14 führen. Die Gasverteileinrichtung 6 wird durch die Behälterwand getragen.

Oberhalb der Gasverteileinrichtung 6 ist ein Tropfenabscheider 13 angeordnet.

Das Wasser 14 muss dabei dem Nasswäscher 1 nicht über Sprühdüsen zugeführt werden, sondern es kann oberhalb der Gasverteileinrichtung 6 über ein verlaufendes Rohr mit Löchern in der Seitenwand zugeführt werden (Direktbeschickung).

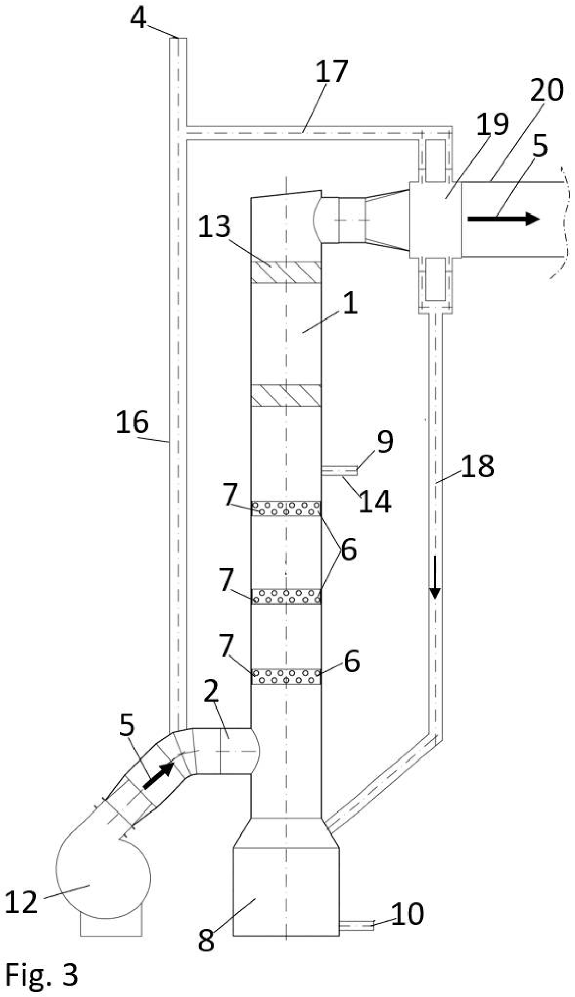

In Figur 3 ist ein weiteres Ausführungsbeispiel der Erfindung dargestellt. Hier wird der Trägergasstrom 5 nicht im Kreis geführt, sondern über die Ableitung 20 ins Freie geführt. Da im Trägergasstrom 5 Reste des Abdampfes 4 vorhanden sein können, wird der Trägergasstrom 5, bevor er ins Freie geleitet wird, mit Hilfe eines Wärmetauschers 19 erwärmt. Durch diese Erwärmung wird auch der restliche Abdampf 4 im Trägergasstrom 5 erwärmt, sodass dadurch beim Austritt ins Freie eine sichtbare Dampffahne vermieden werden kann. Der Wärmetauscher 19 kann dafür beispielsweise mit einem Abdampfteilstrom 17 beheizt werden. Dieser Abdampfteilstrom 17 wird vom Abdampf 4 abgezweigt, bevor der Abdampf 4 dem Trägergasstrom 5 zugeführt wird. Das im Wärmetauscher 19 aus dem Abdampfteilstrom 17 entstehende Kondensat 18 kann dann dem Sumpf 8 des Nasswäschers 1 zugeführt werden.

Das beschriebene Verfahren bietet eine einfache, preiswerte Möglichkeit, die Dampffahne niederzuschlagen. Zusätzlich wird ein Teil der löslichen, flüchtigen Dampfbestandteile ausgetragen. Zudem besteht die Möglichkeit die Abwärme zu nutzen, entweder direkt Prozessintern bzw. auch zur Vorwärmung für eine Fernwärmeeinspeisung. Außerdem ist eine Koppelung mit einer Hochtemperaturwärmepumpe denkbar, zur Erzeugung von Niederdruckdampf.
1 Nasswäscher
2 Zuleitung
3 Ringleitung
4 Abdampf
5 Trägergasstrom
6 Gasverteileinrichtung
7 Stab- oder Rohrroste
8 Sumpf
9 Frischwasser
10 Heißwasser
11 Pumpe
12 Gebläse
13 Tropfenabscheider
14 Wasserzufuhr zum Wäscher
15 Kreislaufwasser
16 Abdampfleitung
17 Abdampfteilstrom
18 Kondensat
19 Wärmetauscher
20 Ableitung

## Patentansprüche

1. Verfahren zur Abscheidung von Abdampf (4), insbesondere zur Abscheidung von Abdampf (4) aus Anlagen zur Zellstofferzeugung, wobei der Abdampf (4) einem Nasswäscher (1) zugeführt wird und kondensiert wird, **dadurch gekennzeichnet, dass** der Abdampf (4) einem Trägergasstrom (5) zugeführt wird und dieser Trägergasstrom (5) dann mit dem Abdampf (5) einem Nasswäscher (1) zugeführt wird, wobei der Abdampf (4) im Nasswäscher (1) mit Hilfe von zugeführtem Wasser (14) kondensiert wird, wobei der Nasswäscher (1) zumindest eine Gasverteileinrichtung (6) aufweist, durch die der Trägergasstrom (5) hindurchgeführt und in der der Abdampf (4) kondensiert wird, wobei die Gasverteileinrichtung (6) aus zumindest einem Stab- oder Rohrrost (7) oder aus zumindest einem Lochblech aufgebaut ist.

2. Verfahren nach Anspruch 1, **dadurch gekennzeichnet, dass** die Gasverteileinrichtung aus zumindest zwei übereinander angeordneten, vertikal beabstandeten Stab-oder Rohrrosten (7) aufgebaut ist.

3. Verfahren nach Anspruch 1 oder 2, **dadurch gekennzeichnet, dass** durch die Gasverteileinrichtung (6) der freie Gasquerschnitt auf 15% bis 50% des gesamten Querschnittes des Nasswäschers (1) reduziert wird.

4. Verfahren nach einem der Ansprüche 1 bis 3, **dadurch gekennzeichnet, dass** der Trägergasstrom (5) durch ein Gebläse (12) über eine Ringleitung (3) im Kreis geführt wird und dabei der Abdampf (4) dem Trägergasstrom (5) vor dem Gebläse (12) zugeführt wird.

5. Verfahren nach einem der Ansprüche 1 bis 3, **dadurch gekennzeichnet, dass** der Trägergasstrom (5) nach dem Nasswäscher (1) mit Hilfe eines Wärmetauschers (19) erwärmt wird und danach ins Freie abgegeben wird.

6. Verfahren nach Anspruch 5, **dadurch gekennzeichnet, dass** der Trägergasstrom (5) im Wärmetauscher (19) mit Hilfe eines Abdampfteilstroms (17) erwärmt wird.

7. Verfahren nach einem der Ansprüche 1 bis 6, **dadurch gekennzeichnet, dass** das zur Kondensation verwendete Wasser (14) aus dem Sumpf (8) des Nasswäschers (1) entnommen wird und mit Hilfe einer Pumpe (11) zumindest zum Teil erneut dem Nasswäscher (1) zur Kondensation des Abdampfes (4) zugeführt wird.

8. Verfahren nach einem der Ansprüche 1 bis 7, **dadurch gekennzeichnet, dass** dem Nasswäscher (1) durch die Kondensation entstandenes Heißwasser (10) entnommen wird und durch kälteres Frischwasser (9) ersetzt wird.

9. Verfahren nach Anspruch 8, **dadurch gekennzeichnet, dass** die im abgeführten Heißwasser (10) enthaltene Wärme rückgewonnen wird, beispielsweise mit Hilfe eines Wärmetauschers oder einer Wärmepumpe.

10. Verfahren nach einem der Ansprüche 1 bis 9, **dadurch gekennzeichnet, dass** als Trägergasstrom (5) Luft verwendet wird.

11. Verfahren nach einem der Ansprüche 1 bis 10, **dadurch gekennzeichnet, dass** sich im Trägergasstrom (5) anreichernde gasförmige Verbindungen zur Vermeidung eines Überdrucks im Nasswäscher (1) durch ein Überdruckventil abgelassen werden.

12. Vorrichtung zur Kondensation von Abdampf (4), insbesondere zur Kondensation von Abdampf (4) aus Anlagen zur Zellstofferzeugung, mit einem Nasswäscher (1), in dem der Abdampf (4) mit Hilfe von zugeführtem Wasser (14) kondensierbar ist, **dadurch gekennzeichnet, dass** die Vorrichtung eine Zuleitung (2) für ein Trägergas aufweist, die in den Nasswäscher (1) mündet, wobei eine Abdampfleitung (16) in die Zuleitung (2) mündet und wobei der Nasswäscher (1) zumindest eine Gasverteileinrichtung (6) aufweist, wobei die Gasverteileinrichtung (6) aus einem Stab- oder Rohrrost (7) oder aus einem Lochblech aufgebaut ist.

13. Vorrichtung nach Anspruch 12, **dadurch gekennzeichnet, dass** die Gasverteileinrichtung (6) aus zumindest zwei übereinander angeordneten, vertikal beabstandeten Stab-oder Rohrrosten (7) aufgebaut ist.

14. Vorrichtung nach Anspruch 12 oder 13, **dadurch gekennzeichnet, dass** die Zuleitung (2) Bestandteil einer Ringleitung (3) ist, in die der Nasswäscher (1) integriert ist, und in der der Trägergasstrom (5) im Kreis führbar ist, wobei die Abdampfleitung (16) in die Ringleitung (3) mündet.

15. Vorrichtung nach einem der Ansprüche 12 bis 14, **dadurch gekennzeichnet, dass** oberhalb der Gasverteileinrichtung (6) ein Tropfenabscheider (13) angeordnet ist.

16. Vorrichtung nach Anspruch 14 oder 15, **dadurch gekennzeichnet, dass** der Nasswäscher (1) oder die Ringleitung (3) ein Überdruckventil aufweist.

17. Vorrichtung nach einem der Ansprüche 12 bis 16, **dadurch gekennzeichnet, dass** der Nasswäscher (1) mehrere, vorzugsweise zwei oder drei Gasverteileinrichtungen (6) aufweist, die in vertikaler Richtung voneinander beabstandet sind.
